# EUROPEAN PATENT SPECIFICATION

(11) **EP 1 193 848 B1**
(45) Date of publication and mention of the grant of the patent: **14.11.2012**
(21) Application number: 00402613.4
(22) Date of filing: 21.09.2000
(51) Int. Cl.: H02M 1/00

(54) **Cicuit arrangement comprising a switch mode power supply**
Schaltungsanordnung mit Schaltnetzteil
Circuit comprenant une alimentation de puissance à découpage

(43) Date of publication of application: 03.04.2002
(73) Proprietor: Thomson Licensing, 92130 Issy-les-Moulineaux (FR)
(72) Inventor: Zee, Kum Yoong, Johor Bahru, 81100, Johor (MY); Koh, Kian Meng, Singapore 731897 (SG); Ng, Seng Huat, Singapore 680154 (SG)
(74) Representative: Arnold, Klaus-Peter

(56) References cited:
- DE-A- 4 105 942
- US-A- 5 640 317
- PATENT ABSTRACTS OF JAPAN vol. 006, no. 182 (E-131), 18 September 1982 (1982-09-18) & JP 57 097361 A (MIYAZAKI TAKAHARU), 17 June 1982 (1982-06-17)

## Description

The present invention refers to a circuit arrangement comprising a switch mode power supply (SMPS) operating on a battery voltage. A circuit arrangement of this kind is used for example in cars in connection with video and audio equipment and used particularly within a television set in a car which requires a switch mode power supply for generating the respective supply voltages of the television set.

Switch mode power supplies in a car operate as a DC-DC converter, connected to the DC voltage of the car battery. The switch mode power supply may be able to provide a normal mode as well as a standby mode, for example for a television set, and has to be completely off on an user command, especially when the car is not used to avoid any unloading of the battery. When the switch mode power supply is switched on, it has to be able to start from the beginning, supplied with a battery voltage of about 12V or even less, when the car battery is older. A DC-DC converter operating on a DC voltage is known for example from EP 0 255 067 A1, also from the earlier European application 99117549.8.

A circuit arrangement according to the preamble of claim 1 is disclosed in DE-A-4105942.

The object of the present invention is, to provide a reliable circuit arrangement as described above without requiring too much parts. This object is achieved by means of the invention as specified in claim 1. Advantageous developments of the invention are specified in the subclaims.

The circuit arrangement of the invention comprises a start-up circuit for a switch mode power supply of a respective device, which is coupled to a battery voltage, for providing a start-up pulse for the switch mode power supply, which is higher than the battery voltage. With this start-up circuit conventional controller integrated circuits for SMPS can be used, which are widely used in power supplies of television sets, DVD players or video recorders, for example the integrated circuit TDA4605. Controller ICs of this kind work usually with an operating voltage VCC between 7 and 20 Volts. However, for the start-up, these circuits require a start-up voltage, called VCC(start), in the range of 12 up to 16 Volts, which is necessary for the initialization of the integrated circuit. Once the IC is running, the operating voltage VCC can be lower.

With the invention it is therefore possible to use a switch mode power supply comprising an integrated circuit controller and designed for mains voltage, which works also as a DC-DC converter supplied by for example a car battery, without any larger modifications.

The start-up pulse from the start-up circuit has a maximum amplitude for example which lies in the range of 12 to 20 Volts, and has a time duration which can be easily generated by a capacitor-diode network. In a preferred embodiment, a network with one transistor, two capacitors, two diodes and four resistors is sufficient to provide a reliable start-up circuit for the power supply.

The invention is now explained in more detail below by way of a preferred embodiment, with reference to schematic diagrams, which show:
- Fig. 1: a circuit arrangement comprising a switch mode power supply and a microprocessor operating on a battery voltage,
- Fig. 2:: a circuit diagram with a start-up circuit for a controller IC of the switch mode power supply, and
- Fig. 3: voltage diagrams showing the operation of the start-up circuit.

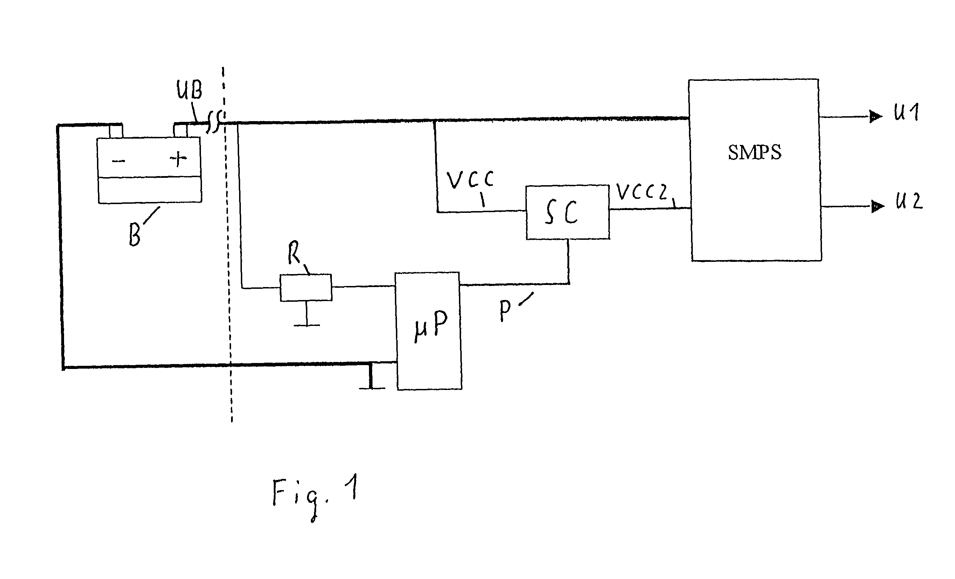

The switch mode power supply SMPS of Fig. 1 operates on a battery voltage UB provided by a battery B. The battery B in this example is a car battery providing a voltage UB of about 12 Volts. The battery voltage UB is usually not directly connected to the SMPS, as indicated in Fig. 1, because an electric car system comprises in addition short circuit protection circuits and/or ON/OFF switches, but said voltage amplitude is essentially available for the SMPS. The SMPS provides DC output voltages U1, U2 for respective circuits within a device, as known from state of the art, for example for a television set.

The SMPS comprises on the primary side an integrated circuit (not shown), working as a controller circuit for the regulation of the output voltages U1, U2, as known for example from EP-A-0 744 819. The integrated circuit usually requires a special operating voltage VCC(start), when the respective device is switched on, to provide a start-up of the switch mode power supply. This operating voltage is supplied according to Fig. 1 via a start-up circuit SC, which provides a modified operating voltage VCC2, derived from a voltage VCC and which superimposes a start-up pulse on the operating voltage VCC when the device is turned on. In this embodiment the operating voltage VCC is provided by the battery voltage UB, but as the operating voltage VCC also a different voltage supply may be used.

The start-up circuit SC is coupled to a microprocessor µP, which provides a pulse P for controlling the start-up circuit SC, as will be explained below. The microprocessor µP is powered independently from the SMPS, in this embodiment by a regulator circuit R coupled to the battery voltage UB. The microprocessor µP may be the controller IC of a television set, which IC is therefore switched on via the regulating circuit R, when switching on the TV.

With this start-up circuit a switch mode power supply with a controller IC normally designed for usage with AC mains input (110 Volts or 220 Volts) can be used also with a low voltage DC input, for example a car battery. Especially, the battery voltage UB can be lower than 12 Volts which can be the case in older car batteries. The switch mode power supply SMPS, controlled by the microprocessor µP via start-up circuit SC, is therefore enabled to work without any start-up problems with car batteries having a larger tolerance.

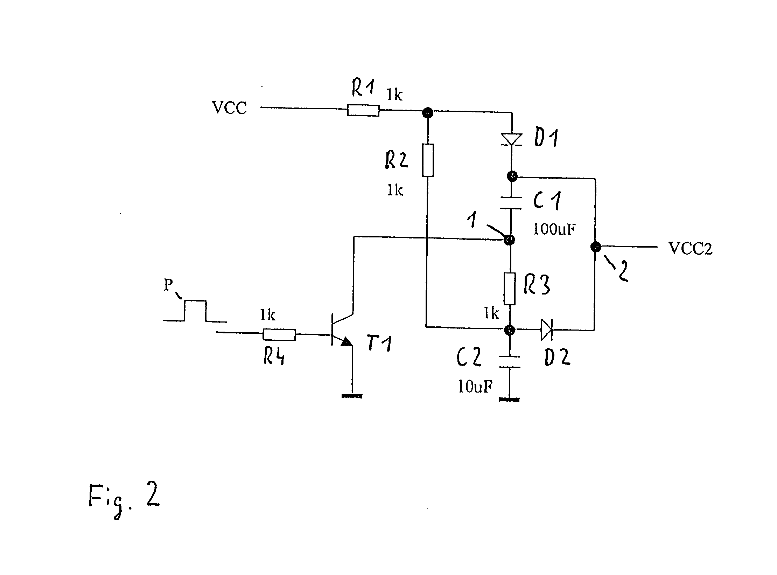

The start-up circuit SC as shown in Fig. 2 is coupled to a supply voltage VCC, which is in this embodiment the voltage UB of a car battery. It comprises two capacitors C1 and C2, arranged in series between the battery voltage VCC and ground respective a reference potential, the series circuit comprising further a resistor R1 and a diode D1 between the voltage supply VCC and capacitor C1, and a resistor R3 between capacitors C1 and C2. The capacitor C1 is coupled directly to a circuit node 2 and capacitor C2 via a diode D2 to circuit node 2, which provides the start-up voltage VCC2 for the controller IC of the switch mode power supply. The capacitor C2 is further coupled via a resistor R2 to a voltage node between resistor R1 and diode D1 for charging this capacitor.

To a circuit node 1 between capacitor C1 and resistor R3 a switching stage is connected by which this circuit node 1 can be coupled to ground. The switching stage is in this embodiment a transistor T1, coupled with its collector to the circuit node 1, and coupled with its control electrode to the microprocessor µP, see Fig. 1, via a resistor R4, which effects a current limitation. The microprocessor µP provides a pulse P for controlling the start-up circuit SC.

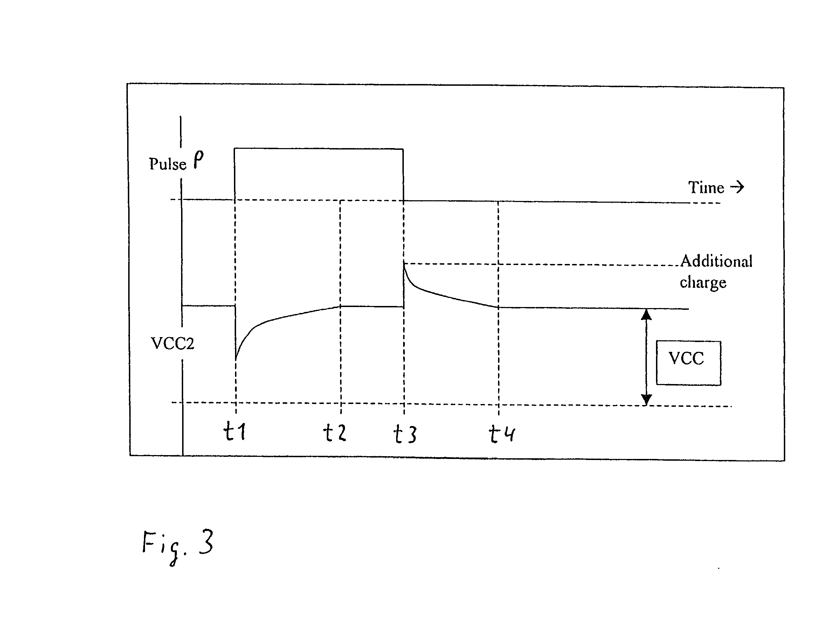

The operation of the start-up circuit SC is now described with help of the voltage diagrams according to Fig. 3, which shows in the upper part the pulse P and in the lower part the corresponding output voltage VCC2 of the start-up circuit in dependence of the time: When the transistor T1 is off (closed), capacitor C2 is charged up to the voltage VCC via resistors R1 and R2. This voltage VCC is also available via diode D1 at circuit node 2. Capacitor C1 is not charged because the voltage potential at its both terminals is about the same.

When the transistor T1 switches through, time point t1, circuit node 1 is coupled to ground and then the capacitor C1 is charged up via resistor R1 and diode D1 to voltage VCC. The circuit node 2 sees therefore a voltage drop according to the voltage drop at circuit node 1, see voltage VCC2 in Fig. 3. After a certain time, time point t2, when the capacitor C1 is charged up again, the voltage at circuit node 2 is again back to voltage VCC. The voltage at capacitor C2 is then lower according to the resistors R1, R2 and R3, which form a voltage divider with regard to ground, when transistor T1 is open. The voltage above C2 at time point t2 is therefore: (VCC x R3)/(R1+R2+R3).

When the transistor T1 is then closed, at time point t3, the capacitors C2 and C1 form a series circuit via resistor R3 and therefore at circuit node 2 a start-up pulse according to the added voltages of both capacitors shows up of approximately: VCC x (1 + R3)/(R1 + R2 + R3). (The voltages above the diodes when conducting have not been considered in this calculation.) When capacitor C1 is discharged, at time point t4, the voltage at circuit node 2 is again down to voltage VCC, as indicated in Fig. 3.

The capacitor C1 superimposes therefore an additional voltage on the supply voltage VCC, controlled by the falling edge of voltage pulse P, as supplied by the microprocessor µP. The capacity of capacitor C1 is chosen larger, at least by factor of two as compared with capacitor C2, to provide a sufficient charge and pulse width of the start-up pulse for starting the controller IC of the SMPS. In this embodiment the capacitor C1 has a capacity of 100 µF and the capacitor C2 of 10 µF.

With a start-up circuit according to Fig. 2 it is therefore possible even with a car battery voltage as low as 10 Volts to provide a start-up pulse of about 14 to 15 Volts, sufficient to kick on a controller IC requiring a minimum start-up voltage VCC(start) of 12 Volts.

## Claims

1. Circuit arrangement comprising
a switch mode power supply (SMPS) operating on a battery voltage (UB), and
a start-up circuit (SC) for said power supply (SMPS), said start-up circuit (SC) being coupled to the battery voltage (UB) and providing a start-up pulse (VCC2) for the switch mode power supply (SMPS), which is higher than the battery voltage (UB),
wherein the start-up circuit (SC) comprises a network with a first and a second capacitor (C1, C2), which are charged in a first step and which voltages are added in a second step for providing the start-up pulse (VCC2), and a first circuit node (1) arranged between the two capacitors (C1, C2), which first circuit node (1) is coupled to a switching stage (T1) and wherein both capacitors (C1, C2) are charged in the first step when the switching stage (T1) switches through, and the first capacitor (C1) is decoupled from the battery voltage (UB) via a first diode (D1),
**characterized in that**
the second capacitor (C2) is decoupled from the battery voltage (UB) via a first resistor (R2) and from the first circuit node (1) via a second resistor (R3), and
a second circuit node (2) is coupled directly to a third node arranged between the first diode (D1) and the first capacitor (C1) and coupled via a second diode (D2) to a fourth node arranged between the second resistor (R3) and the second capacitor (C2), the second circuit node (2) providing the start-up pulse (VCC2) in the second step, when the switching stage (T1) closes.

2. Circuit arrangement according to claim 1, **characterized in that** the capacitance of the first capacitor (C1) is distinctly larger than the capacitance of the second capacitor (C2), at least by a factor of 2.

3. Circuit arrangement according to claim 1 or 2, **characterized in that** the switch mode power supply (SMPS) comprises an integrated controller circuit for controlling the switching transistor of the switch mode power supply (SMPS).

4. Circuit arrangement according to one of the preceding claims, **characterized in that** it comprises a microprocessor (µP) and a regulator circuit (R), coupled to said battery voltage (UB) for supplying said microprocessor (µP).

## Patentansprüche

1. Schaltungsanordnung, die umfasst:
ein Schaltnetzteil (SMPS), das an einer Batteriespannung (UB) arbeitet, und
eine Startschaltung (SC) für das Netzteil (SMPS), wobei die Startschaltung (SC) mit der Batteriespannung (UB) gekoppelt ist und für das Schaltnetzteil (SMPS) einen Startimpuls (VCC2) bereitstellt, der höher als die Batteriespannung (UB) ist,
wobei die Startschaltung (SC) ein Netz mit einem ersten und mit einem zweiten Kondensator (C1, C2), die in einem ersten Schritt geladen werden und deren Spannungen in einem zweiten Schritt addiert werden, um den Startimpuls (VCC2) bereitzustellen, und mit einem ersten Schaltungsknoten (1), der zwischen den zwei Kondensatoren (C1, C2) angeordnet ist, umfasst, wobei der erste Schaltungsknoten (1) mit einer Schaltstufe (T1) gekoppelt ist und wobei beide Kondensatoren (C1, C2) in dem ersten Schritt geladen werden, wenn die Schaltstufe (T1) durchschaltet, und wobei der erste Kondensator (C1) über eine erste Diode (D1) von der Batteriespannung (UB) entkoppelt ist,
dadurch gekenntzeichnet, dass
der zweite Kondensator (C2) über einen ersten Widerstand (R2) von der Batteriespannung (UB) und über einen zweiten Widerstand (R3) von dem ersten Schaltungsknoten (1) entkoppelt ist, und
ein zweiter Schaltungsknoten (2) direkt mit einem zwischen der ersten Diode (D1) und dem ersten Kondensator (C1) angeordneten dritten Knoten gekoppelt ist und über eine zweite Diode (D2) mit einem zwischen dem zweiten Widerstand (R3) und dem zweiten Kondensator (C2) angeordneten vierten Knoten gekoppelt ist, wobei der zweite Schaltungsknoten (2) den Startimpuls (VCC2) in dem zweiten Schritt, wenn die Schaltstufe (T1) schließt, bereitstellt.

2. Schaltungsanordnung nach Anspruch 1, **dadurch gekennzeichnet, dass** die Kapazität des ersten Kondensators (C1) mindestens um einen Faktor 2 deutlich größer als die Kapazität des zweiten Kondensators (C2) ist.

3. Schaltungsanordnung nach Anspruch 1 oder 2, **dadurch gekennzeichnet, dass** das Schaltnetzteil (SMPS) eine integrierte Controllerschaltung zum Steuern des Schalttransistors des Schaltnetzteils (SMPS) umfasst.

4. Schaltungsanordnung nach einem der vorhergehenden Ansprüche, dadurch gekenntzeichnet, dass sie einen Mikroprozessor (µP) und eine Reglerschaltung (R), die mit der Batteriespannung (UB) gekoppelt ist, um den Mikroprozessor (µP) zu versorgen, umfasst.

## Revendications

1. Agencement de circuit comprenant
une alimentation de puissance à découpage (SMPS) fonctionnant sur une tension de batterie (UB), et
un circuit de démarrage (SC) pour ladite alimentation (SMPS), ledit circuit de démarrage étant couplé à la tension de batterie (UB) et générant une impulsion de démarrage (VCC2) à l'alimentation de puissance à découpage (SMPS), de puissance supérieure à la tension de batterie (UB),
dans lequel le circuit de démarrage (SC) comprend un réseau disposant d'un premier et d'un deuxième condensateur (C1, C2), chargés dans un premier temps et dont les tensions sont ajoutées dans un deuxième temps afin de fournir l'impulsion de démarrage (VCC2), et un premier noeud de circuit (1) installé entre les deux condensateurs (C1, C2), dont le premier noeud de circuit (1) est couplé à une étape de découpage (T1), et dans lequel les deux condensateurs (C1, C2) sont chargés lors de la première étape lorsque l'étape de découpage (T1) découpe, et le premier condensateur (C1) est découplé de la tension de batterie (UB) via une première diode (D1),
**caractérisé en ce que**
le deuxième condensateur (2) est découplé de la tension de batterie (UB) via une première résistance (R2) et du premier noeud de circuit (1) via une deuxième résistance (R3), et
un deuxième noeud de circuit (2) est couplé directement à un troisième noeud installé entre la première diode (D1) et le premier condensateur (C1) et couplé via une deuxième diode (D2) à un quatrième noeud installé entre la deuxième résistance (R3) et le deuxième condensateur (C2), le deuxième noeud de circuit (2) fournissant l'impulsion de démarrage (VCC2) à la deuxième étape, lorsque l'étape de découpage (T1) se termine.

2. Agencement de circuit selon la revendication 1, **caractérisé en ce que** la capacitance du premier condensateur (C1) est nettement supérieure à la capacitance du deuxième condensateur (C2), au moins par un facteur de 2.

3. Agencement de circuit selon les revendications 1 ou 2, **caractérisé en ce que** l'alimentation de puissance de découpage (SMPS) comprend un circuit de contrôle intégré afin de contrôler le transistor de découpage de l'alimentation de puissance à découpage (SMPS).

4. Agencement de circuit selon une des revendications précédentes, **caractérisé en ce qu'**il comprend un microprocesseur (µP) et un circuit régulateur (R) couplé à ladite tension de batterie (UB), permettant d'alimenter ledit microprocesseur
